**Europäisches Patentamt**

**European Patent Office**

**Office européen des brevets**

(19)

(11) Veröffentlichungsnummer: **0 133 202**
A2

# (12) EUROPÄISCHE PATENTANMELDUNG

(21) Anmeldenummer: 84106359.7

(22) Anmeldetag: 04.06.84

(51) Int. Cl.⁴: **G 06 F 12/14**, H 04 L 9/00

(30) Priorität: 28.06.83 DE 3323268

(43) Veröffentlichungstag der Anmeldung: 20.02.85
**Patentblatt 85/8**

(84) Benannte Vertragsstaaten: **AT CH DE FR GB IT LI**

(71) Anmelder: **Siemens Aktiengesellschaft, Berlin und München Wittelsbacherplatz 2, D-8000 München 2 (DE)**

(72) Erfinder: **Koller, Alois, Dr., Konrad-Celtis-Strasse 4a, D-8000 München 70 (DE)**
Erfinder: **Lagger, Helmut, Dr., 5701 Stanton Av., Pittsburgh, PA, 15206 (US)**

(54) **Verfahren zum Potenzieren in Galois-Feldern GF(2n) für Zwecke der Datenverarbeitung, der Datensicherung, der Datenübertragung usw., insbesondere für den Schlüsselaustausch für eine verschlüsselte Datenübertragung, und Schaltungsanordnung zur Durchführung des Verfahrens.**

(57) Eine Schaltungsanordnung zur Durchführung eines Verfahrens zum Potenzieren in Galoisfeldern $GF(2^n)$ für Zwecke der Datenverarbeitung, der Datensicherung, der Datenübertragung usf., insbesondere für den Schlüsselaustausch für eine verschlüsselte Datenübertragung, mit einer Steuerlogik (C) zum Erzeugen von Ladetaktsignalen oder Steuertaktsignalen (T1 ... T4), an welche Steuerlogik (C) Speicher (S1, S2, S3, S4) unmittelbar oder mittelbar mit Signalausgängen derart angeschlossen sind, daß die Steuerlogik (C) durch Ausgangssignale der Speicher (S1 ... S4) in unterschiedlicher, vorbestimmter Weise Steuertaktsignale (T1 ... T4) ausgibt, wobei die Steuertaktsignale (T1 ... T4) in vorbestimmter Weise an Signaleingänge der Speicher (S1 ... S4) und einer Verarbeitungseinheit (SM), die zwischen dem dritten Speicher (S3) und dem vierten Speicher (S4) angeordnet ist, geliefert werden. Die Signalausgänge des vierten Speichers (S4) sind ausschließlich an Signaleingänge der Verarbeitungseinheit (SM) geführt und die Signalausgänge des dritten Speichers (S3) sind, sowohl an Signaleingänge der Verarbeitungseinheit (SM) als auch an Signaleingänge der Steuerlogik (C) geführt.

— 1 —

SIEMENS AKTIENGESELLSCHAFT  Unser Zeichen
Berlin und München  VPA 83 P 1 4 3 8 E

Verfahren zum Potenzieren in Galois-Feldern $GF(2^n)$ für Zwecke der Datenverarbeitung, der Datensicherung, der Datenübertragung usw., insbesondere für den Schlüsselaustausch für eine verschlüsselte Datenübertragung, und Schaltungsanordnung zur Durchführung des Verfahrens

Die vorliegende Erfindung betrifft ein Verfahren zum Potenzieren in Galois-Feldern $GF(2^n)$ für Zwecke der Datenverarbeitung, der Datensicherung, der Datenübertragung usw., insbesondere für den Schlüsselaustausch für eine verschlüsselte Datenübertragung, und eine Schaltungsanordnung zur Durchführung des Verfahrens.

Bei der Chiffrierung von Nachrichten kommt dem dafür notwendigen Austausch von Schlüsselparametern eine große Bedeutung zu. Es gibt elegante Verfahren, die es erlauben, solche Parameter auf öffentlich zugänglichen Nachrichtenwegen zu übertragen. Diese Verfahren beruhen im wesentlichen auf mathematischen Operationen in Primkörpern.

In den letzten Jahren erlangte der Nachrichtenaustausch mit Hilfe elektronischer Systeme große Bedeutung. Viele Daten im persönlichen, medizinischen, finanziellen und staatlichen Bereich müssen dabei vor unberechtigtem Zugriff geschützt werden. Ein Schutz gegen solche Zugriffe besteht darin, daß die Nachrichten chiffriert werden. Die vielen möglichen Chiffren lassen sich im wesentlichen in zwei Klassen einteilen, nämlich solche von symmetrischen und die unsymmetrischen Chiffrierverfahren. Die symmetrischen Verfahren, die gegenwärtig haupt-
Pap 1 Sti/28.6.83 sächlich verwendet werden, benutzen sowohl für den Ver-
wie für den Entschlüsselungsvorgang denselben Schlüsselparameter k, der zuvor auf einem sicheren Weg ausgetauscht werden muß. Gerade dieser Schlüsselaustausch ist
jedoch die Schwachstelle der symmetrischen Verfahren.
Erstens kann der Austausch doch nicht absolut sicher
sein, zweitens gibt es bei großen Kommunikatinsnetzen
mit N Teilnehmern N(N-1)/2 mögliche Verbindungen, für
die jeweils ein eigener Schlüsselaustausch notwendig
ist. Dazu benötigt man Verteilerzentren, die nur schwer
zuverlässig geschützt werden können, vergl. beispielsweise Ehrsam, W.F., Matyas,S.M., Meyer, C.H., Tuchmann,
W.L.: "A Cryptographic Key Management", IBM Systems
Journal, 1978, Vol. 17, No. 2, S. 106-125. Die unsymmetrischen Verfahren, auch "public key"-Systeme
genannt, verwenden für einen Ver- und Entschlüsselungsvorgang zwei verschiedene Parameter, wobei aus
der Kenntnis des einen, der sogar öffentlich bekannt
sein darf, der andere nicht erschlossen werden kann. Im
direkten Gebrauch sind die unsymmetrischen Verfahren
schwerfälliger als die symmetrischen. Sie eignen sich
jedoch vorzüglich für den Schlüsselaustausch und decken
somit gerade den schwachen Punkt der letzteren ab.

Die zuvor genannten Operationen in Galois-Feldern der Charakteristik 2 erlauben vorteilhafterweise eine höhere Rechengeschwindigkeit im Hinblick auf Multiplizierungs- bzw. Potenzierungsvorgänge gegenüber herkömmlichen Verfahren. Der vorliegenden Erfindung liegt die Aufgabe zugrunde, ein Verfahren zum Potenzieren in Galois-Feldern $GF(2^n)$ für die eingangs genannten Zwecke anzugeben, für das ein hinreichend kleiner Rechenzeitaufwand erforderlich ist. Aufgabengemäß soll desweiteren eine Schaltungsanordnung zur Durchführung des Verfahrens geschaffen werden, die einen einfachen Aufbau aufweist und mittels Standardbausteinen zu realisieren ist.

Die der vorliegenden Erfindung zugrundeliegende Aufgabe wird durch ein Verfahren nach dem Oberbegriff des Patentanspruchs 1 gelöst, das durch die in dem kennzeichnenden Teil des Patentanspruchs angegebenen Merkmale charakterisiert ist. Zur Lösung der Aufgabe betreffend die Schaltungsanordnung zur Durchführung des Verfahrens wird eine Schaltungsanordnung gemäß dem Oberbegriff des Patentanspruchs 8 vorgeschlagen, welche Schaltungsanordnung durch die in dem kennzeichnenden Teil dieses Patentanspruchs angegebenen Merkmale gekennzeichnet ist.

Vorteilhafte Weiterbildungen des erfindungsgemäßen Verfahrens bzw. der erfindungsgemäßen Schaltungsanordnung sind durch in weiteren Unteransprüchen angegebenen Merkmale gekennzeichnet.

Das erfindungsgemäße Verfahren hat den Vorteil, daß aufgrund der Rechengeschwindigkeit, die gegenüber herkömmlichen Verfahren erzielbar ist, beispielsweise zum Zwecke eines Schlüsselparameteraustausches Binärwörter mit verhältnismäßig großer Stellenzahl verwendet werden können, so daß die Abhörsicherheit für die Daten gegenüber herkömmlichen Verschlüsselungsverfahren deutlich erhöht werden kann.

Im folgenden wird die vorliegende Erfindung anhand mehrerer Figuren im einzelnen beschrieben.

Fig. 1 zeigt ein Flußdiagramm mit mehreren Verfahrensschritten A... E.

Fig. 2 zeigt ein weiteres Flußdiagramm mit mehreren Unterschritten C1/E1 .... C5/E5.

Fig. 3 zeigt ein Blockschaltbild eines bevorzugten Ausführungsbeispiels für die erfindungsgemäße Schaltungsanordnung zur Durchführung des Verfahrens.

Fig. 4 zeigt ein Blockschaltbild, das Einzelheiten des inneren Schaltungsaufbaus einer Verarbeitungseinheit SM angibt.

Fig. 5 zeigt eine schematische Darstellung eines Flußdiagramms für das an sich bekannte DES (DATA ENCRYPTION STANDARD)-System, auf das das erfindungsgemäße Verfahren vorteilhaft anzuwenden ist.

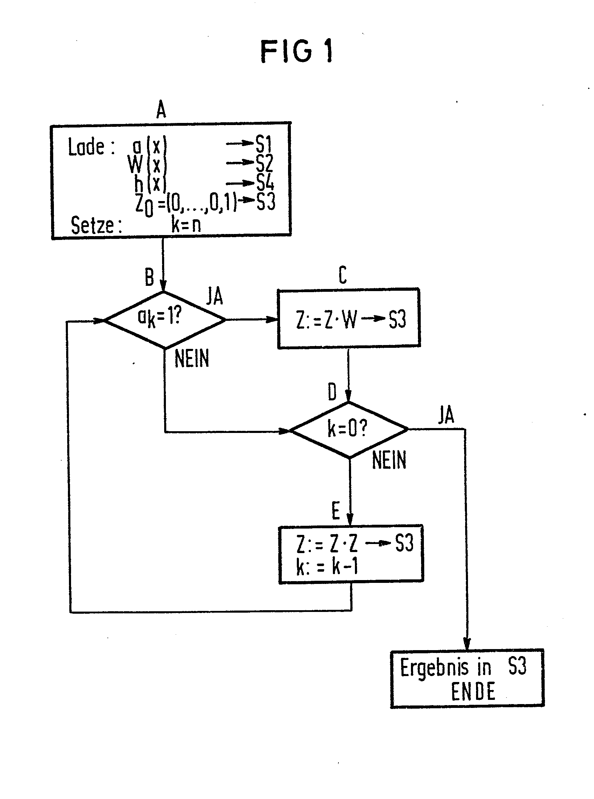

Wie bereits erläutert, zeigt Fig. 1 ein Flußdiagramm mit mehreren Verfahrensschritten A ... E für das erfindungsgemäße Verfahren. In dem Schritt A wird eine Speicheranordnung mit einer Vielzahl von Speichern S1, S2, S3, S4 für Elemente a, w, h, z in der Aufgabe "$w^a = z \bmod h$" zu bilden, initialisiert, wobei a ein Exponent, w ein Basispolynom, h ein irreduzibles Polynom und z ein Ergebnis sind, und wobei diese Größen als (n+1)-Tupel von Komponenten 0 oder 1 dargestellt sind. In dem Schritt B wird in einer Entscheidungsraute entschieden, ob ein Ausdruck $a_k = 1$ ist oder nicht ist. Wenn der Ausdruck gleich 1 ist, erfolgt ein Sprung nach einem Schritt C, wenn der Ausdruck nicht gleich 1 ist, erfolgt ein Sprung nach einem weiteren Schritt D. In dem genannten Schritt C wird eine Multiplizierung $z := z \cdot w$ durchgeführt, und das Multiplizierungsergebnis wird in den Speicher S3 eingeschrieben, wenn die in dem Schritt D zu treffende Entscheidung aussagt, daß k = 0 ist. Wenn dies nicht der Fall ist, erfolgt ein Sprung zu dem nächsten Schritt E, in dem eine Multiplikation $z := z \cdot z$, ein Überschreiben des Ergebnisses nach dem Speicher S3, ein Dekrementieren des Wertes k um 1 und ein Springen nach dem Schritt B erfolgt. In dem Schritt A wurden die initialisierten Werte für a, w, h, $z_0$ jeweils in den Speicher S1, S2, S4 bzw. S3 eingelesen. Außerdem wurde in diesem Schritt der Wert k = n gesetzt.

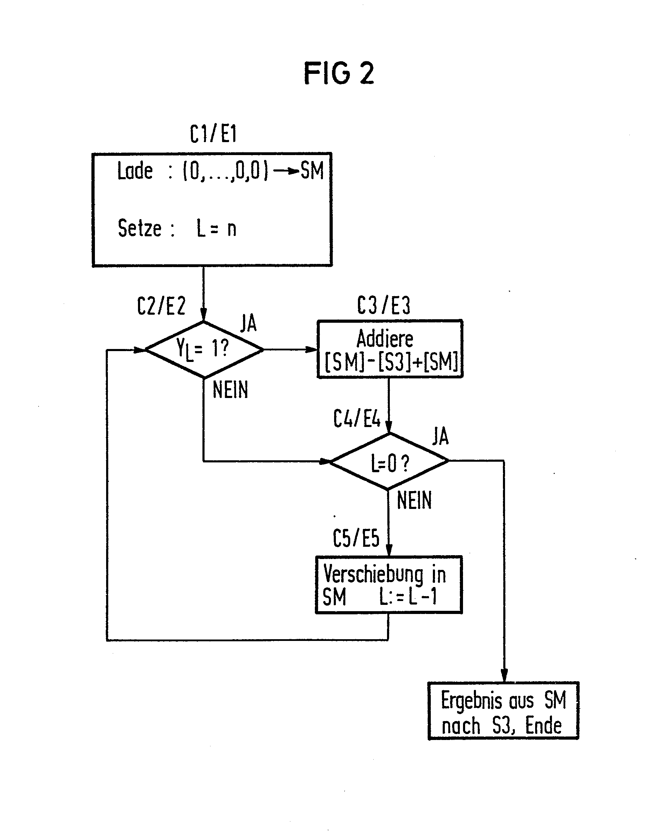

Fig. 2 zeigt, wie bereits erläutert, ein weiteres Flußdiagramm mit Unterschritten C1/E1 ...C5/E5. Die hier gezeigten Unterschritte werden jeweils für den Schritt C bzw. E in dem Flußdiagramm gemäß Fig. 1 ausgeführt. Im einzelnen laufen in diesen Unterschritten folgende Vorgänge ab: In Unterschritt C1/E1) werden die Elemente einer Verarbeitungseinheit SM mit den Werten "0" initialisiert. Die Werte "0" werden in die entsprechenden Speicherplätze der Verarbeitungseinheit SM eingelesen. Außerdem wird in diesem Unterschritt ein Wert 1 = n gesetzt. In dem nächsten Unterschritt C2/E2 wird entschieden, ob ein Wert $Y_1 = 1$ ist oder nicht ist. Wenn $Y_1 = 1$ ist erfolgt ein Sprung zu dem nächsten Unterschritt C3/E3. Wenn dies nicht der Fall ist, erfolgt ein Sprung nach dem Unterschritt C4/E4. In dem Unterschritt C3/E3 wird der Inhalt des dritten Speichers S3 zu dem Inhalt der Verarbeitungseinheit SM addiert, und es erfolgt ein Überschreiben des Inhaltes $[SM] := [SM] + [S3]$. In dem Unterschritt C4/E4 wird entschieden, ob 1 = 0 ist oder nicht ist.

Wenn 1 = 0 ist, kann das Ergebnis aus der Verarbeitungseinheit SM abgerufen und in den dritten Speicher S3
überschrieben werden. Wenn 1 nicht = 0 ist, erfolgt ein
Sprung nach dem Unterschritt C5/E5. In dem Unterschritt
C5/E5 wird der Inhalt [SM] bearbeitet, wobei die
Koeffizienten dieses Inhaltes jeweils an die Stelle des
nächsthöheren Index geschoben werden und wobei der
Koeffizient mit dem höchsten Index zu durch das Polynom
h(x) definierten Koeffizienten rückgeführt und mit
diesen jeweils verknüpft wird. Außerdem wird in diesem
Unterschritt der Wert 1 um 1 dekrementiert.
Anschliessend erfolgt ein Rücksprung nach dem
Unterschritt C2/E2.

Im Falle des Unterschrittes C5/E5 wird die Rückführung
des Koeffizienten mit dem höchsten Index zu den
betreffenden Koeffizienten niedrigwertiger Indizes jeweils mittels einer UND-Verknüpfung mit dem entsprechenden Koeffizienten des irreduziblen Polynoms h = (hn,
... , h1, h0) durchgeführt. Das jeweils entstandene
UND-Verknüpfungsergebnis wird mittels einer Exklusiv-
ODER-Verknüpfung mit dem betreffenden, in der Stellenfolge vorangehenden Koeffizienten verknüpft, im Falle
des Unterschrittes C3/E3 wird jeder Koeffizient des Inhaltes [SM] jeweils mittels einer weiteren Exklusiv-
ODER-Verknüpfung mit dem betreffenden Koeffizienten des
Inhaltes [S3], nämlich z = (zn, ..., z1, z0) verknüpft.
Das entstandene Exklusiv-ODER-Verknüpfungsergebnis wird
jeweils auf demselben Koeffizienten des Inhaltes [SM]
rückgeführt.

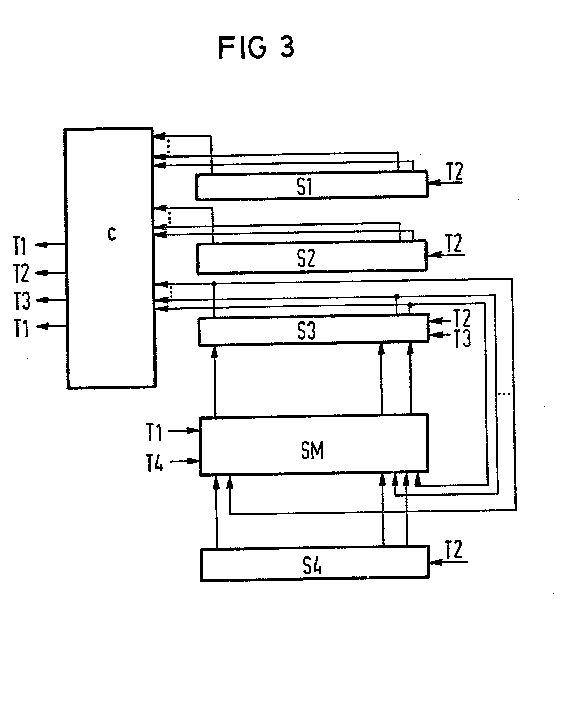

Fig. 3 zeigt, wie bereits erläutert, ein Blockschaltbild eines bevorzugten Ausführungsbeispiels für eine
Schaltungsanordnung zur Durchführung des erfindungsgemäßen Verfahrens. Die Schaltungsanordnung enthält eine
Steuerlogik C zum Erzeugen von Ladetaktsignalen oder
Steuertaktsignalen T1 ... T4. An diese Steuerlogik C

0133202

sind die Speicher S1, S2, S3, S4 unmittelbar oder
mittelbar mit Signalausgängen derart angeschlossen, daß
die Steuerlogik C durch Ausgangssignale der Speicher S1
... S4 in unterschiedlicher, vorbestimmter Weise die
Steuertaktsignale T1 ... T4 ausgibt, wobei die Steuertaktsignale T1 ... T4 in vorbestimmter Weise an Signaleingänge der Speicher S1 ... S4 und der Verarbeitungseinheit SM, die zwischen dem dritten Speicher S3 und dem
vierten Speicher S4 angeordnet ist, geliefert werden. In
dieser Schaltungsanordnung sind die Signalausgänge des
vierten Speichers S4 ausschließlich an Signaleingänge
der Verarbeitungseinheit SM angeschlossen. Die Signalausgänge des dritten Speichers S3 sind sowohl an Signaleingänge der Verarbeitungseinheit SM als auch an Signaleingänge der Steuerlogik C geführt.

Die Steuerlogik C kann gemäß einer vorteilhaften Weiterbildung der Erfindung als programmierbares Verknüpfungsfeld PLA (Programmable Logic Array) realisiert sein.
Eine andere Ausführungsform der Steuerlogik C sieht vor,
daß diese als Mikrocomputer realisiert ist. Schließlich
kann in einer anderen Ausführungsform die Steuerlogik C
als Bool'sche Schaltungsanordnung mit quasi-diskreten
Verknüpfungsbausteinen, z.B. in TTL-Technik, realisiert
sein.

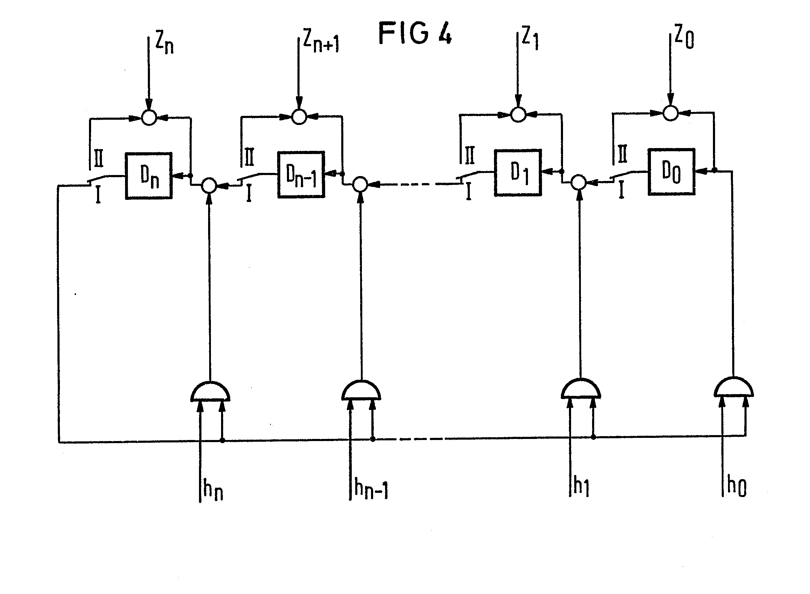

Fig. 4 zeigt, wie bereits erläutert, die schaltungstechnischen Einzelheiten der Verarbeitungseinheit SM. Wie
der Fig. 4 zu entnehmen ist, ist die Verarbeitungseinheit SM als ein mehrfach rückgekoppeltes Schieberegister mit Stufen D0 ... Dn ausgebildet, wobei der Signalausgang der in Schieberichtung letzten Stufe Dn dieses
Schieberegisters auf die dem diesen Verfahren zugrundeliegenden Polynom entsprechenden Stufen über dem Verarbeitungsvorgang entsprechender Verknüpfungsglieder,

0133202

nämlich UND-Glieder, rückgekoppelt sind. Jeder einzelnen Stufe DO ... Dn ist jeweils ein zusätzlicher Rückkopplungsweg, der den jeweiligen Signalausgang der betreffenden Stufe über ein weiteres Verknüpfungsglied, nämlich ein Exklusiv-ODER-Verknüpfungsglied, mit dem Signaleingang desselben verbindet, zugeordnet. Die Verbindung des betreffenden Signalausgangs mit dem Signaleingang der folgenden Stufe bzw. mit dem jeweils eigenen Signaleingang ist über ein jeder Stufe individuell zugeordnetes Umschaltmittel schaltbar.

Das in Fig. 4 gezeigte Schieberegister kann derart realisiert sein, daß die einzelnen Stufen DO ... Dn sowie die Verknüpfungsglieder und die Umschaltmittel in einer gemeinsamen integrierten Schaltungsanordnung realisiert sind, wobei die Stufen des Schieberegisters ladungsgekoppelte Stufen sind. Eine andere Ausführungsform der Verarbeitungseinheit gemäß Fig. 4 sieht vor, daß die einzelnen Elemente quasi-diskrete Elemente sind, wobei die einzelnen Stufen des Schieberegisters als bistabile Schaltkreise ausgeführt sind.

Ein vorteilhafter Anwendungsfall des erfindungsgemäßen Verfahrens sieht vor, daß das Verfahrens zum Austausch eines nur zwei Teilnehmern bekannten Schlüsselparameters durch Datenübertragung über öffentlich zugängliche Übertragungskanäle benutzt wird. Dabei ist vorgesehen, daß das erfindungsgemäße Verfahren auf das Verfahren nach Diffie, Hellman, Berkowiz et al angewendet wird.

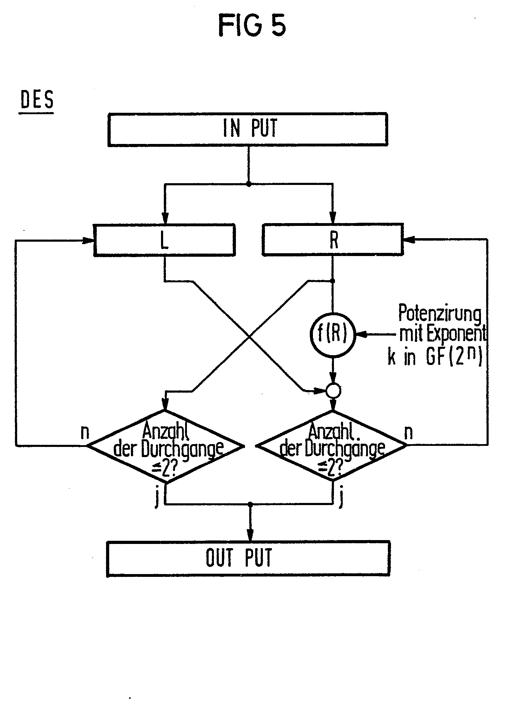

Vorteilhafterweise kann das erfindungsgemäße Verfahren auch zur Verschlüsselung von Nachrichten, die über öffentlich zugängliche Übertragungskanäle ausgetauscht werden, angewendet werden, wobei vorgesehen ist, daß das erfindungsgemäße Verfahren in einem sog. symmetrischen Verschlüsselungssystem benutzt wird, beispielsweise in dem an sich bekannten DES (Data Encryption Standard)-
Verschlüsselungssystem anstelle der dort vorgesehenen
Substitutions- und Permutationsfunktionen benutzt wird,
vergl. Fig. 5.

Außerdem kann das erfindungsgemäße Verfahren vorteilhaft
auf ein Verfahren zur Erzeugung von Zufallszahlen angewendet werden, wobei vorgesehen ist, daß eine erforderliche Multiplizierung oder Potenzierung modulo h(x)
mittels des erfindungsgemäßen Verfahrens durchgeführt
wird.

Schließlich ist das erfindungsgemäße Verfahren vorteilhaft zum Suchen von irreduziblen Polynomen geeignet,
wobei vorgesehen ist, daß aus einer Vielzahl erzeugter
Zufallszahlen, nämlich n-Tupeln, durch Prüfen mittels
des Fermat'schen Lehrsatzes unter Anwendung des erfindungsgemäßen Verfahrens zum Potenzieren eine ggf. vorhandene Irreduzibilität festgestellt wird.

Im folgenden werden ergänzend noch einige Erläuterungen zu
dem mathematischen Hintergrund des erfindungsgemäßen Verfahrens
gegeben.

## 1. Einwegfunktionen nach Diffie und Hellman

Das bekannteste public-key System ist ohne Zweifel das von Rivest, Shamir und Adleman , kurz RSA-System genannt. Im folgenden wird der hiervon etwas verschiedene Schlüsselaustausch von
Diffie und Hellman betrachtet, vergl. IEEE Transactions on
Information Theory, 1976, Vol. IT-22, No. 6, S. 644 - 652.
Dieses System verwendet eine öffentlich bekannte, große Primzahl p und eine ebenfalls öffentlich bekannte Primitivwurzel
w mod p. Wollen zwei Teilnehmer A und B eine Nachricht austauschen, so wählt jeder von ihnen eine nur ihm selbst bekannte
Zufallszahl $\alpha$ bzw. $\beta$ , bildet die Zahl $z_A \equiv w^{\alpha}$ bzw. $z_B \equiv w^{\beta}$ mod p
und teilt diese Zahl dem anderen mit; danach bildet A die Zahl
$z_{BA} \equiv w^{\beta\alpha} \equiv k$, B die Zahl $z_{AB} \equiv w^{\alpha\beta} \equiv k$ mod p. k ist beide Male
dieselbe Zahl. Sie ist nur den Teilnehmern A und B bekannt und
eignet sich als gemeinsamer Schlüsselparameter für ein symmetrisches Chiffrierungssystem.

Der Einwegcharakter ergibt sich daraus, daß das Potenzieren
sehr rasch ausgeführt werden kann, für die Umkehrfunktion, den
Logarithmus, jedoch kein einfaches Verfahren bekannt ist. Für
die Potenzierung benötigt man maximal 2*ld($\alpha$) bzw. 2*ld($\beta$) Multiplikationen, wie das Beispiel

$$w^{13} = (((w^2)w)^2)^2 w$$

zeigt. Zu dieser Auflösung gelangt man, wenn man die duale Darstellung des Exponenten betrachtet (vgl. Abschnitt 4):

13(dekadisch) = 1101(dual)

Wo oben vor der schließenden Klammer ein w steht, steht hier
eine 1, sonst 0. Anstelle von 12 Multiplikationen benötigt man
nur 5. Der Exponent 1001 (dekadisch) = 1111101001 (dual) erfordert statt 1000 nur 15 Multiplikationen. Mit wachsenden Zahlen
wird das Verhältnis noch größer.

0133202

83 P 1 4 3 8 E

Zur Umkehrung der Funktion $w^\alpha \equiv z \mod p$ muß der Logarithmus $\alpha \equiv \log_w z \mod p$ gebildet werden. Das ist aber nur durch systematisches Suchen möglich, es sind keine Algorithmen bekannt, die eine ähnliche Vereinfachung wie beim Potenzieren bringen würden.

Wählt man eine Primzahl und einen Exponenten in der Größenordnung einer etwa 200 Bit langen Dualzahl, so wird der Unterschied im Aufwand zur Berechnung der Potenz bzw. des Logarithmus für praktische Zwecke hinreichend groß. Das Logarithmieren ist praktisch nicht mehr möglich. Für das Potenzieren sind etwa 300 Multiplikationen von 200 Bit langen Zahlen mit jeweiliger Restklassenbildung auszuführen. Für größere Computer ist das ein durchaus erträglicher Aufwand. Jedoch gibt es Anwendungsfälle (z.B. Mobilfunk), die eine noch kürzere Rechenzeit als wünschenswert erscheinen lassen.

Im folgenden wird eine Modifikation erläutert, der das erfindungsgemäße Verfahren zugrundeliegt.

## 2. Einwegfunktionen in Galois-Feldern

Die Modifikation besteht darin, daß man nicht mit den Restklassen einer großen Primzahl p arbeitet, sondern mit Polynomen eines Galois-Feldes der Charakteristik 2. An die Stelle der Primzahl p tritt ein irreduzibles Polynom h(x) vom Grade n über dem Primkörper der Charakteristik 2, das heißt mit Koeffizienten 0 und 1. Dabei kann n in der Größenordnung 100 bis 200 (dekadisch) angenommen werden. w sei wiederum ein primitives Element des Galoisfeldes, dessen Potenzen laut Definition alle $2^n-1$ von Null verschiedenen Elemente des Galois-Feldes liefern. Die Verschlüsselungsvorschrift ist die gleiche wie bei Diffie und Hellmann $w(x)^{\alpha\beta} = w(x)^{\beta\alpha} \equiv k(x) \mod h(x)$. $\alpha$ und $\beta$ sind ganze rationale Zahlen. k ist zunächst ein Element des Galois-Feldes, läßt sich aber unverändert als Dualzahl interpretieren.

0133202

83 P 1438 E

Der Übergang ins Galois-Feld bringt folgende Vorteile:

- Bei der Addition der Elemente modulo 2 entfällt der Übertrag; alle n Stellen können folglich in einem einzigen Zeittakt addiert werden.
- Die Multiplikation läßt sich in eine Folge von Verschiebungen in einem rückgekoppelten Schieberegister und Additionen modulo 2 zerlegen. Sie ist schaltungstechnisch leicht zu handhaben und läuft schnell ab.
- Beim Quadrieren eines Polynoms werden lediglich die Exponenten von x verdoppelt und dann modulo h(x) reduziert.
- Ein irreduzibles Polynom ist leicht zu finden.
- Das Reduzieren modulo h(x) ist nur eine Folge von Additionen.

Es ist günstig, n so zu wählen, daß $2^n-1 = q$ eine Primzahl ist (Mersennesche Primzahl.      Dieser Fall tritt nur ein, wenn n selbst eine Primzahl ist. Die kleinsten Werte von n sind

$n = 2, 3, 5, 7, 13, 17, 19, 31, 61, 89, 107, 127, 521, 607, 1279,$ .

Für solche Werte von n ist jedes von Null und Eins verschiedene Element ein primitives Element, da $a(x)^q \equiv 1 \mod h(x)$ ist und q keine Teiler außer 1 und q hat. Ferner ist für diese n ein irreduzibles Polynom besonders leicht zu finden, wie im nächsten Abschnitt gezeigt wird.

Für n = 107 ergeben sich folgende Abschätzungen der Rechenzeiten. Die Multiplikation braucht maximal n Schiebezyklen und n Additionen. Nimmt man für einen Schiebezyklus wie für eine Addition dieselbe Zykluszeit $\tau$ an, so ist die Zeit für eine Multiplikation maximal gleich $2n\tau$. Das Potenzieren benötigt maximal 2n Multiplikationen, also $4n^2\tau$. Bei einer für den heutigen Stand der Technik relativ langsamen Zykluszeit $\tau = 10^{-7}$ s benötigt man also bei n = 107 nur $2 \cdot 10^{-5}$ s für die Multiplikation und $4 \cdot 10^{-3}$ s für das Potenzieren.

Will hingegen jemand den geheimen Exponenten ermitteln, so braucht er im Mittel etwa $2^{n/2}$ Multiplikationen. Bei einer extrem schnellen Zykluszeit $\tau = 10^{-9}$ s ergibt das für n = 107 eine Rechenzeit von $t = 2^{n/2} 2n\tau \approx 2,7 \cdot 10^9$ s $\approx 86$ Jahre. Bei n = 127 kommt man auf 100000 Jahre.

## 3. Darstellungen der Galoisfelder der Charakteristik 2

Galoisfelder werden in vielen Werken der Literatur eingehend behandelt. Hier sollen nur jene Algorithmen zusammengestellt werden, die für das Verfahren und die zugehörige Schaltungstechnik unmittelbar von Bedeutung sind.

Ein $GF(2^n)$, d.i. ein Galois-Feld von $2^n$ Elementen, wird repräsentiert durch die Gesamtheit der Polynome $f(x) = a_{n-1} x^{n-1} + \ldots a_1 x + a_0$ vom Grade n-1 oder kleiner, deren Koeffizienten $a_i = 0$ oder 1 sind. Alle rationalen Operationen werden wie gewohnt ausgeführt. Die Koeffizienten sind jeweils modulo 2 zu reduzieren. Bei der Multiplikation treten zunächst Polynome vom Grade n oder höher auf. Diese werden mit Hilfe einer irreduziblen Gleichung n-ten Grades $h(x) = x^n + h_{n-1} x^{n-1} + \ldots + h_1 x + h_0 = 0$ auf einen Grad $n_1 < n$ reduziert. Verschiedene irreduzible Gleichungen desselben Grades liefern isomorphe Körper. Es gibt in jedem GF primitive Elemente, deren Potenzen alle Elemente des Feldes außer Null durchlaufen.

Eine andere Darstellung des gleichen Körpers erhält man aus der Begleit-Matrix

$$\begin{pmatrix} h_{n-1} & h_{n-2} & \cdots & h_1 & h_0 \\ 1 & 0 & \cdots & 0 & 0 \\ 0 & 1 & \cdots & 0 & 0 \\ \cdot & \cdot & \cdots & \cdot & \cdot \\ 0 & 0 & & 1 & 0 \end{pmatrix} ,$$

indem man alle Potenzen und alle Summen der so entstehenden Matrizen bildet. Üblich ist es auch, die gestürzte Matrix zu verwenden.

0133202

83 P 1 4 3 8 E

Jeder n-reihigen Matrix A läßt sich eine Schaltung zuordnen, wenn man n Schaltelemente so miteinander verbindet, daß $a_{ik} = 1$ bedeutet: vom Schaltelement i wird ein Impuls zum Schaltelement k gesandt. Bei $a_{ik} = 0$ gibt es keinen Impuls. Der Matrix

$$A = \begin{pmatrix} 0 & 0 & 1 & 1 \\ 1 & 0 & 0 & 0 \\ 0 & 1 & 0 & 0 \\ 0 & 0 & 1 & 0 \end{pmatrix}$$

wird zweckmäßig die leicht zu realisierende Schaltung gemäß Fig. 4 zugeordnet. Wenn der Pfeil von 4 nach 3 bedeutet, daß der Inhalt des Registers 4 (etwa 0 oder 1) zum Register 3 verschoben wird, so spricht man von einem "Schieberegister". Werden vom Register 1 Signale zu den anderen Registern zurückgeführt, so spricht man von einem "Rückkoppelungs-Schieberegister". Die Rückkopplung hat dieselbe Bedeutung wie das Reduzieren modulo h(x). Führen zwei Pfeile auf dasselbe Schaltelement, so addieren sich die Signale modulo 2 (exklusives Oder, Antivalenzschaltung).

Im Beispiel der abgebildeten Schaltung ist $h(x) = x^4 + x + 1 = 0$. Ein Polynom ist durch seine Koeffizienten gegeben, also $1 = (0001)$, $x = (0010)$, $x^2 = (0100)$, $x^3 = (1000)$, $x^4 = x + 1 = (0011)$, $x^5 = (0110)$ usf. Das entspricht der fortgesetzten Multiplikation mit der Matrix A

$$x = (0001) \cdot \begin{pmatrix} 0 & 0 & 1 & 1 \\ 1 & 0 & 0 & 0 \\ 0 & 1 & 0 & 0 \\ 0 & 0 & 1 & 0 \end{pmatrix} = (0001) \cdot A = (0010).$$

83 P 1438 E

$$x^2 = (0010) \cdot \begin{pmatrix} 0 & 0 & 1 & 1 \\ 1 & 0 & 0 & 0 \\ 0 & 1 & 0 & 0 \\ 0 & 0 & 1 & 0 \end{pmatrix} = (0001) \cdot A^2 = (0100) \quad \text{usf.}$$

Es ist also $A$, $A^2$, $A^3$, $A^4 = A+1$ usf. den Polynomen $x$, $x^2$, $x^3$, $x^4 = x+1$ usf. zugeordnet.

## 4. Algorithmen im GF($2^n$)

Das Rechnen mit Polynomen im GF($2^n$) weist gegenüber dem Rechnen im rationalen Zahlenkörper sowie im Primkörper der Charakteristik $p - 2$ einige Vereinfachungen auf, die sich in der Schaltungstechnik mit Vorteil verwerten lassen.

a) Addition und Subtraktion

$$\begin{array}{ll}
a_{n-1} x^{n-1} + \ldots + a_1 x + a_0 & (a_{n-1}, \ldots, a_1, a_0) \\
& \quad\text{oder} \\
b_{n-1} x^{n-1} + \ldots + b_1 x + b_0 & (b_{n-1}, \ldots, b_1, b_0) \\
\hline
(a_{n-1}+b_{n-1})x^{n-1} + \ldots + (a_1+b_1)x + (a_0+b_0) & (a_{n-1}+b_{n-1}, \ldots, a_1+b_1, a_0+b_0)
\end{array}$$

Die Koeffizienten ermitteln sich aus $0+0 = 1+1 = 0$, $0+1 = 1+0 = 1$. Das ist schaltungstechnisch ein exklusives Oder. Der Übertrag entfällt, alle Koeffizienten können in einem Zeittakt addiert werden. Für jedes Polynom $f$ ist $f+f = 0$, $f = -f$. Minuszeichen können durch Pluszeichen ersetzt werden, die Subtraktion ist gleich der Addition.

b) Die Multiplikation

$a \cdot b = c$ wird zunächst wie üblich definiert durch $c_k = \sum_{i=0}^{k} a_i b_{k-i}$, $k = 0, \ldots, 2n - 2$, danach mit Hilfe der irreduziblen Gleichung auf den Grad $n-1$ reduziert - vgl. c).

Beispiele zur Technik

$\alpha$ ) Wie bei der üblichen Multiplikation:

```
1011 · 1101        Die Zeilen werden ohne Übertrag addiert.
     1101
      1101
   1111111
```

$\beta$ ) Man schreibt den zweiten Faktor in umgekehrter Reihenfolge
der Koffizienten auf einen Papierstreifen, schiebt ihn der
Reihe nach von links nach rechts, zählt jeweils die übereinanderstehenden Paare von Einsen; ist die Anzahl ungerade,
schreibt man unter die führende 1 des Papierstreifens eine
1, sonst eine Null.

```
  1011       1011            1011
 1011    ,  1011    , ... ,      1011
   1         11              1111111
```

Diese Ausführung ist für das Rechnen per Hand sehr bequem.

$\gamma$ ) Schaltungstechnisch zweckmäßig ist ein Algorithmus, der
auf dem Hornerschen Schema beruht.

$$( a_{n-1} x^{n-1} + ... + a_1 x + a_0 ) ( b_{n-1} x^{n-1} + ... + b_1 x + b_0 ) =$$

$$= B_{n-1} x^{n-1} + ... + B_1 x + B_0 =$$

$$= x ( x ( ... ( x ( B_{n-1} x + B_{n-2} ) + B_{n-3} ) + ... + B_1 ) + B_0$$

Mit $b_i = 0$, ist auch $B_i = 0$. Für $b_i = 1$ ist $B_i = (a_{n-1}, a_{n-2},$
$..., a_1, a_0)$, und $B_i x$ ist nach dem vorigen Abschnitt gleichbedeutend mit der Multiplikation des Vektors $B_i$ mit der Matrix

A und anschließender Reduktion modulo h. Dies ist gleichbedeutend mit einem Takt im rückgekoppelten Schieberegister. Im Hornerschema werden die Klammern von innen nach außen abgearbeitet.

c) Die Reduktion (Division mit Rest)

Man schreibt die erste Eins des irreduziblen Polynoms jeweils unter die am weitesten links stehende Eins des überlangen Polynoms und addiert.

Beispiel: Irreduzibles Polynom 10011.

```
1111111          1111111 ≡ 110 mod 10011.
10011
 110011
 10011
  10101
  10011
   110
```

d) Der euklidsche Algorithmus und die Inversion

Der Algorithmus ist der gleiche wie bei den ganzen rationalen Zahlen. Beispiel

```
31                  10011
20  1  14           1011  10   101
11  1   9           101   10    10
 9  1   5            1             1
 2  4   4
 1      1
```

14·20 - 9·31 = 1          10011·10 + 1011·101 = 1
14·20 ≡ 1 mod 31          1011·101 ≡ 1 mod 10011

83 P 1438 E

**e) Die Division**

Die Division ist die Multiplikation mit dem Inversen.

**f) Das Quadrieren**

Für das Quadrieren eignen sich alle unter Punkt b angegebenen
Verfahren. Es kann auch ausgenutzt werden, daß bekanntlich

$$\left(\sum_i a_i x^i\right)^2 = \sum_i a_i x^{2i} \text{ gilt.}$$

Im n-Tupel rückt jede Eins, ab der letzten Stelle gezählt, um
die doppelte Anzahl von Stellen nach links. Nötigenfalls folgt
eine Reduktion.

Beispiel: $1011^2 = 1000101 = 1001 \bmod 10011$.

**g) Das Potenzieren**

Der Exponent $\varepsilon$ wird als Dualzahl dargestellt und nach dem Hornerschen Schema entwickelt:

$$\varepsilon = e_k 2^k + e_{k-1} 2^{k-1} + \ldots + e_1 2 + e_0 = 2(2\ldots(2(2e_k + e_{k-1}) + e_{k-2}) + \ldots + e_1) + e_0$$

Es darf $e_k = 1$ angenommen werden. Man beginnt bei der innersten
Klammer:

$$a^{2 \cdot e_{k-1}} = a^2 \cdot a^{e_{k-1}} = a_1 \quad , \quad a_1^2 \, a^{e_{k-2}} = a_2 \quad \text{usf.}$$

Im n-Tupel werden die Stellen von links nach rechts abgearbeitet.
Bei jedem Weiterrücken um eine Stelle wird quadriert, anschließend,
falls das nächste $e_i = 1$ ist, mit a multipliziert.

Beispiel: Irreduzibles Polynom 10011;
gesucht $x^{11} = (10)^{11}$, die 11 im Exponenten dekadisch.
Dual: $(10)^{1011}$

| 10 | 1 | Reduktion | Multiplikation mit x |
|---|---|---|---|
| 100 | 0 | $100^2 = 10000$ | $11 \cdot 10 = 110$ |
| | | 10011 | $111 \cdot 10 = 1110$ |
| 110 | 1 | 11 | |
| 1110 | 1 | $110^2 = 10100$ | |
| | | 10011 | |
| | | 111 | |

Kontrolle: $x^4 = x+1$, $x^8 = x^2+1$, $x^{11} = x^5+x^3 = (x^2+x) + x^3 = x^3 + x^2 + x$.


14 Patentansprüche
5 Figuren

VPA 83 P 1438 E

Patentansprüche

1. Verfahren zum Potenzieren in Galoisfelder $GF(2^n)$ für Zwecke der Datenverarbeitung, der Datensicherung, der Datenübertragung usf., insbesondere für den Schlüsselaustausch für eine verschlüsselte Datenübertragung, d a d u r c h   g e k e n n z e i c h n e t , daß folgende Schritte vorgesehen sind:

a) Initialisieren einer Speicheranordnung mit einer Vielzahl von Speichern (S1, S2, S3, S4) für Elemente a, w, h, z in der Aufgabe "$w^a = z \bmod h$" zu bilden, wobei a ein Exponent, w ein Basispolynom, h ein irreduzibles Polynom und z ein Ergebnis sind und wobei diese Größen als (n+1)-Tupel von Komponenten O oder 1 dargestellt sind;

b) Entscheiden, ob a(k), nämlich der k-te Koeffizient (k = n , ... 1, O) des Exponenten gleich 1 ist, wenn ja, dann Springen nach Schritt c), wenn nein, dann Springen nach Schritt c);

c) Multiplizieren z: = z . w, Überschreiben nach Speicher S3;

d) Entscheiden, ob k = O ist, wenn ja, dann Wert für z in Speicher S3 abrufen, wenn nein, dann Springen zum nächsten Schritt e);

e) Multiplizieren z: = z . z, Überschreiben nach Speicher S3, Dekrementieren k um 1 und Springen nach Schritt b).

2. Verfahren nach Anspruch 1, d a d u r c h   g e - k e n n z e i c h n e t , daß die Schritte c) und e) jeweils aus folgenden Unterschritten bestehen:

Pap 1 Sti/28.6.83

c1/e1) Initialisieren der Elemente einer Verarbeitungseinheit (SM) mit den Werten "0";

c2/e2) Entscheiden, ob $Y(1)$, nämlich der l-te Koeffizient ($1 = n, \ldots 1, 0$) des Multiplikators gleich 1 ist, wenn ja, dann Springen nach Schritt c3/e3), wenn nein, dann Springen nach Schritt c4/e4), wobei der Multiplikator im Falle des Schrittes c) gleich w - gespeichert in dem zweiten Speicher (S2) - und im Falle des Schrittes e) gleich z - gespeichert in dem dritten Speicher (S3) - ist;

c3/e3) Addieren des Inhaltes des dritten Speichers (S3) zu dem Inhalt der Verarbeitungseinheit (SM) und Überschreiben $[SM] := [SM] + [S3]$;

c4/e4) Entscheiden, ob $1 = 0$ ist, wenn ja, dann Ergebnis aus der Verarbeitungseinheit (SM) abrufen und in den dritten Speicher (S3) überschreiben, wenn nein, dann Springen nach Schritt c5/e5);

c5/e5) Bearbeiten des Inhaltes $[SM]$, wobei die Koeffizienten dieses Inhaltes jeweils an die Stelle des nächsthöheren Index geschoben werden, und wobei der Koeffizient mit dem höchsten Index zu durch das Polynom h(x) definierten Koeffizienten rückgeführt und mit diesen jeweils verknüpft wird, Dekrementieren von 1 um 1 und Springen nach Schritt c2/e2).

3. Verfahren nach Anspruch 2, d a d u r c h  g e k e n n z e i c h n e t , daß im Falle des Unterschrittes c5/e5) die Rückführung des Koeffizienten mit dem höchsten Index zu den betreffenden Koeffizienten niedrigwertiger Indizes jeweils mittels einer UND-Verknüpfung mit dem entsprechenden Koeffizienten des irreduziblen Polynoms h = (hn, ... , h1, h0) durchgeführt wird, daß das jeweils entstandene UND-Verknüpfungsergebnis mittels einer Exklusiv-ODER-Verknüpfung mit dem betreffenden in der Stellenfolge vorangehenden Koeffizienten durchgeführt wird, daß im Falle des Unterschrittes c3/e3) jeder Koeffizient des Inhaltes [SM] jeweils mittels einer weiteren Exklusiv-ODER-Verknüpfung mit dem betreffenden Koeffizienten des Inhaltes [S3] , nämlich z = (zn, ... , z1, z0), verknüpft wird, und daß das entstandéne Exklusiv-ODER-Verknüpfungsergebnis jeweils auf denselben Koeffizienten des Inhaltes [SM] rückgeführt wird.

4. Verfahren zum Austausch eines nur zwei Teilnehmern bekannten Schlüsselparameters zur Datenübertragung über öffentlich zugängliche Übertragungskanäle mittels des Verfahrens nach einem der Ansprüche 1 ... 3 , d a - d u r c h   g e k e n n z e i c h n e t , daß das erfindungsgemäße Verfahren auf das Verfahren nach Diffie, Hellman, Berkowiz et al angewendet wird.

5. Verfahren zur Verschlüsselung von Nachrichten, die über öffentlich zugängliche Übertragunqskanäle ausgetauscht werden, mittels des Verfahrens nach einem der Ansprüche 1 ... 3 , d a d u r c h   g e k e n n - z e i c h n e t , daß das erfindungsqemäße Verfahren in einem sog. symmetrischen Verschlüsselungssystem benutzt wird, beispielsweise in dem an sich bekannten DES (DATA ENCRYPTION STANDARD)-Verschlüsselungssystem anstelle der dort vorgesehenen Substitutions- und Permutationsfunktionen.

6. Verfahren zur Erzeugung von Zufallszahlen mittels des Verfahrens nach einem der Ansprüche 1 ... 3, d a - d u r c h   g e k e n n z e i c h n e t, daß eine erforderliche Multiplizierung oder Potenzierung modulo h(x)

0133202

VPA  83 P 1 4 3 8 E

mittels des erfindungsgemäßen Verfahrens durchgeführt
wird.

7. Verfahren zum Suchen von irreduziblen Polynomen
mittels des Verfahrens nach einem der Ansprüche 1 ... 3
und nach Anspruch 6,  d a d u r c h  g e k e n n -
z e i c h n e t ,  daß aus einer Vielzahl erzeugter
Zufallszahlen, nämlich n-Tupeln, durch Prüfen mittels
des Fermat'schen Lehrsatzes unter Anwendung des erfindungsgemäßen Verfahrens zum Potenzieren eine ggf.
vorhandenen Irreduzibilität festgestellt wird.

8. Schaltungsanordnung zur Durchführung des Verfahrens nach einem der Ansprüche 1 ... 3, d a -
d u r c h  g e k e n n z e i c h n e t ,  daß eine
Steuerlogik (C) zum Erzeugen von Ladetaktsignalen oder
Steuertaktsignalen (T1 ... T4) vorgesehen ist, an welche Steuerlogik (C) die Speicher (S1, S2, S3, S4) unmittelbar oder unmittelbar mit Signalausgängen derart
angeschlossen sind, daß die Steuerlogik (C) durch Ausgangssignale der Speicher (S1 ... S4) in unterschiedlicher, vorbestimmter Weise die Steuertaktsignale (T1
... T4) ausgibt, wobei die Steuertaktsignale (T1 ...T4)
in vorbestimmter Weise an Signaleingänge der Speicher
(S1 ...S4) und der Verarbeitungseinheit (SM), die
zwischen dem dritten Speicher (S3) und dem vierten
Speicher (S4) angeordnet ist, geliefert werden und daß
die Signaleingänge des vierten Speichers (S4)
ausschließlich an Signaleingänge der Verarbeitungseinheit (SM) und die Signalausgänge des dritten Speichers (S3) sowohl an Signaleingänge der Verarbeitungseinheit (SM) als auch an Signaleingänge der Steuerlogik
(C) geführt sind.

VPA 83 P 1 4 3 8 E

9. Schaltungsanordnung nach Anspruch 8, d a d u r c h g e k e n n z e i c h n e t , daß die Steuerlogik (C) als programmierbares Verknüpfungsfeld PLA (Programmable Logic Array) realisiert ist.

10. Schaltungsanordnung nach Anspruch 8, d a d u r c h g e k e n n z e i c h n e t , daß die Steuerlogik (C) als Mikrocomputer realisiert ist.

11. Schaltungsanordnung nach Anspruch 8, d a d u r c h g e k e n n z e i c h n e t , daß die Steuerlogik (C) als Bool'sche Schaltungsanordnung mit quasi-diskreten Verknüpfungsbausteinen, z.B. in TTL-Technik realisiert ist.

12. Schaltungsanordnung nach Anspruch 8, d a d u r c h g e k e n n z e i c h n e t , daß die Verarbeitungseinheit (SM) als ein mehrfach rückgekoppeltes Schieberegister (DO - Dn) ausgebildet ist, wobei der Signalausgang der in Schieberichtung letzten Stufe (Dn) des Schieberegisters auf die dem diesem Verfahren zugrundeliegenden Polynom entsprechende Stufen über dem Verarbeitungsvorgang entsprechende Verknüpfungsglieder rückgekoppelt ist, daß bei jeder einzelnen Stufe (DO ...Dn) jeweils ein zusätzlicher Rückkopplungsweg, der den jeweiligen Signalausgang der betreffenden Stufe über ein weiteres Verknüpfungsglied mit dem Signaleingang desselben verbindet, vorgesehen ist und daß die Verbindung des betreffenden Signalausgang mit dem Signaleingang der folgenden Stufe bzw. mit dem eigenen Signaleingang über Umschaltmittel schaltbar ist.

13. Schaltungsanordnung nach Anspruch 12, d a d u r c h g e k e n n z e i c h n e t , daß die Elemente der Verarbeitungseinheit (SM), nämlich die Stufen des Schieberegisters, die Verknüpfungsglieder und die Umschalt-

VPA 83 P 1438 E

mittel Festkörperelemente sind, die in einer gemeinsamen
integrierten Schaltung realisiert sind.

14. Schaltungsanordnung nach Anspruch 12, d a d u r c h
g e k e n n z e i c h n e t , daß die Stufen des Schieberegisters als bistabile Schaltkreise realisiert sind.

## FIG 1

A

Lade :  a (x)    ⟶ S1
        W (x)    ⟶ S2
        h (x)    ⟶ S4
        $Z_0 = (0,\ldots,0,1)$ ⟶ S3
Setze :     k = n

B
$a_k = 1$?    JA

C
Z := Z·W ⟶ S3

NEIN

D
k = 0?    JA

NEIN

E
Z := Z·Z ⟶ S3
k := k-1

Ergebnis in  S3
ENDE

FIG 2

C1/E1

Lade : (0,...,0,0) → SM

Setze : L = n

C2/E2          JA          C3/E3

$Y_L = 1$?  →  Addiere
               [SM]-[S3]+[SM]

NEIN

C4/E4
                        JA
        L=0 ?

                        NEIN

C5/E5

Verschiebung in
SM      L:=L-1

Ergebnis aus SM
nach S3, Ende

0133202

3/5

FIG 3

FIG 4

## FIG 5

DES

INPUT

L | R

$f(R)$ ← Potenzirung mit Exponent k in $GF(2^n)$

n — Anzahl der Durchgänge ≤ 2? — Anzahl der Durchgänge ≤ 2? — n

j | j

OUTPUT